# EUROPEAN PATENT SPECIFICATION

(11) **EP 0 767 699 B1**
(45) Date of publication and mention of the grant of the patent: **23.09.1998**
(21) Application number: 95924951.7
(22) Date of filing: 27.06.1995
(51) Int. Cl.: B01D 19/00, E21B 43/34

(54) **SUPPRESSION OF SLUG FLOW IN A MULTI-PHASE FLUID STREAM**
DÄMPFUNG VON BRECHERSTRÖMUNG IN EINEM MEHRPHASIGEN FLÜSSIGKEITSSTROM
SUPPRESSION D'UN ECOULEMENT A BOUCHONS DANS UN FLUX DE FLUIDE POLYPHASIQUE

(30) Priority: 28.06.1994 EP 94201863
(43) Date of publication of application: 16.04.1997
(73) Proprietor: SHELL INTERNATIONALE RESEARCH MAATSCHAPPIJ B.V., 2596 HR Den Haag (NL)
(72) Inventor: HOLLENBERG, Jan, Frans, NL-1031 CM Amsterdam (NL); DE WOLF, Sjoerd, NL-1031 CM Amsterdam (NL)
(86) International application number: EP9502519
(87) International publication number: WO9600604

(56) References cited:
- EP-A- 0 410 522
- US-A- 1 897 398
- US-A- 3 630 002
- US-A- 4 708 793
- US-A- 4 852 395
- US-A- 5 209 765
- US-A- 5 256 171
- PATENT ABSTRACTS OF JAPAN vol. 13 no. 95 (C-573) [3443] ,6 March 1989 & JP,A,63 274408 (MITSUBISHI) 11 November 1988,

## Description

The invention relates to suppression of slug flow in a multi-phase fluid stream. More particularly, the invention relates to a method and system for preventing growth of liquid slugs in a stream of multiphase fluid flowing through a flowline system including a riser section and a gas/liquid separator located downstream the riser section.

In the oil and gas industry it is common practice to transport a multiphase fluid containing crude oil or condensate, water and gas from a well through a single pipeline system to a processing facility. For example in case of offshore oil production crude oil, production water and associated gas are generally simultaneously transported through a single subsea pipeline to gas/liquid separating equipment located onshore or on an offshore platform. Several flow regimes are known to occur in such a stream of multiphase fluid, including stratified flow, core flow, mist flow and slug flow. Of these flow regimes slug flow is generally to be avoided as it consists of alternating batches of liquid (termed slugs) and gas surges. Under certain flow conditions growth of liquid slugs may easily occur, which leads to severe slugging whereby a flow pattern of alternating production starvation (no flow), large liquid slugs and strong gas surges at the exit of the flowline system occur. Supplying such an alternating pattern of liquid slugs and gas surges to a gas/liquid separator strongly reduces the efficiency of the separator, as the gas/liquid separator must be operated with acceptable pressure fluctuations and should deliver an acceptably low liquid content in the gas outlet conduit and an acceptably low gas content in the liquid outlet conduit.

A method for preventing slug growth in a pipeline system during simultaneous transportation of a gas and a liquid through the pipeline system is disclosed in Oil & Gas journal, Nov. 12, 1979. In this known method a valve is arranged at the top of a riser, which valve is manually or automatically regulated so as to minimise the pipeline pressure upstream of the riser and to minimise the differential pressure fluctuations in the riser. Transmitters are used to transmit pressure signals for regulating the valve, which transmitters are installed at a subsea part of the pipeline system. This known method is based on the assumptions that severe slugging only occurs in pipelines having a section of downward inclination when seen in the direction of flow and that slug growth can be prevented by regulating the volumetric fluid flux as a function of fluid pressure variations.

JP-A-63-274408 discloses a separator control apparatus which adjusts a valve in a gas outlet of a gas liquid separator by adding the outputs of a supersonic multiphase flowmeter in the inlet of the separator and of a manometer within the separator to exert a constant pressure in the separator.

EP-B-410522 discloses a method of preventing slug growth in a stream of multiphase fluid flowing from a flowline into a gas/liquid separator, whereby fluid flow rate control means are provided to manipulate the fluid flow rate.

This known method comprises measuring the liquid flow rate in the liquid outlet of the separator and the gas flow rate in the gas outlet thereof, determining the fluid flux defined as the sum of the liquid flow rate and the gas flow rate, and operating the fluid flow rate control means so as to reduce a variation of the fluid flux. A drawback of this known method and of the method disclosed in JP-A-63-274408 is that measurement of the sum of the liquid and gas flow rates in a multiphase fluid stream is difficult and requires complex measuring equipment.

An object of the invention is to provide an improved method and system for preventing growth of liquid slugs in a flowline system.

More particularly, the invention aims to provide a method of preventing growth of liquid slugs in a stream of multiphase fluid flowing from a flowline into a gas/liquid separator that has a liquid outlet provided with liquid flow rate control means and a gas outlet provided with gas flow rate control means.

The method according to the invention comprises the steps of:
- measuring a liquid level in the separator;
- measuring at least one control variable selected from the group of the liquid flow rate in the liquid outlet, the gas flow rate in the gas outlet, the sum of the liquid flow rate in the liquid outlet and the gas flow rate in the gas outlet, and the fluid pressure at or near the separator; and
- operating said liquid flow rate control means and said gas flow rate control means essentially on the basis of said measurements so as to reduce a difference between said liquid level and a selected reference value of the liquid level, and so as to reduce a difference between said control variable and a selected reference value of the control variable.

By controlling the liquid level in the separator to be as constant as possible, and by controlling the control variable to be as constant as possible, improved control over the flow regime in the flowline system is achieved so that growth of liquid slugs can be prevented in an improved manner. Furthermore, it was found that instead of selecting the fluid flux (being the sum of the liquid flow rate and the gas flow rate) as the controlled variable, the liquid flow rate, the gas flow rate, or the fluid pressure can be selected as the controlled variable.

Furthermore, the present invention aims to provide a system for preventing growth of liquid slugs in a stream of multiphase fluid flowing from a flowline into a gas/liquid separator, said gas/liquid separator having a liquid outlet provided with liquid flow rate control means and a gas outlet provided with gas flow rate control means. The system according to the invention comprises:
- means for measuring a liquid level in the separator;
- means for measuring at least one control variable from the group of the liquid flow rate in the liquid outlet, the gas flow rate in the gas outlet, the sum of the liquid flow rate in the liquid outlet and the gas flow rate in the gas outlet, and the fluid pressure at or near the separator; and
- means for operating said liquid flow rate control means and said gas flow rate control means essentially on the basis of the outputs of said measurement means so as to reduce a difference between said liquid level and a selected reference value of the liquid level, and so as to reduce a difference between said control variable and a selected reference value of the control variable.

Although severe slugging may have a variety of causes, two physical mechanisms are generally considered to lead to severe slugging, firstly liquid accumulating at a low point in the pipeline system and thereby blocking the gas flow, and secondly a liquid slug reducing the velocity of the fluid in the pipeline as the slug flows through an upwardly inclined part of the pipeline system thereby causing an increased gas pressure and an increased liquid hold-up upstream of the upwardly inclined part. Such an upwardly inclined part can for example be an offshore production riser. As the liquid slug leaves the upwardly inclined part, the flow accelerates slightly due to the increased gas pressure. A next slug upstream the slug leaving the upwardly inclined part is also accelerated and thereby sweeps the increased liquid hold-up. Therefore this next slug grows somewhat, leading to intensified subsequent fluctuations in velocity. In this way liquid slugs of increasing lengths are discharged from the pipeline system. The second mechanism may support the first mechanism, but it was found to occur also when a low point in the pipeline system is absent.

Preferably the flowline forms the downstream end part of a subsea pipeline system leading to an offshore platform, said end part suitably being a riser debouching into the gas/liquid separator.

Control of the liquid level in the separator is effectively achieved if said liquid control means is operated so as to reduce the difference between said liquid level and the selected reference value of the liquid level, and said gas flow rate control means is operated so as to reduce the difference between said control variable and the reference value of the control variable.

During a start-up period of the method, for example when control is switched from manual to automatic, which can be just after blockage of the riser section due to accumulating liquid in a liquid slug which has entered said riser section and before said liquid slug enters the separator, said control variable is preferably selected to be the fluid pressure at or near the separator. When during said start-up period the liquid slug has started to flow into the separator, said control variable is suitably selected to be the liquid flow rate in the liquid outlet of the separator.

Severe slug flow can be effectively suppressed if said control variable is selected to be the liquid flow rate in the liquid outlet of the separator, either continuously or after the start-up period.

Alternatively said control variable can suitably be selected to be the sum of the liquid flow rate in the liquid outlet and the gas flow rate in the gas outlet, either continuously or after the start-up period.

The reference value of the control variable, when said variable is the liquid flow rate or the sum of the liquid flow rate and the gas flow rate, can be generated by reducing a difference between the fluid pressure at or near the separator and a selected reference value of the fluid pressure.

The gas/liquid separator indicated hereinbefore can have sufficient capacity for processing the fluid stream, in which case said separator can be the only separator in the system. Alternatively, the separator can form a mini-separator which is located upstream a slug catching separator. The mini-separator then forms a primary separator of which the gas outlet and the liquid outlet debouche into the slug catching separator which forms a secondary separator.

The invention will now be described in more detail and by way of example with reference to the accompanying drawings in which:
Fig. 1 shows schematically a flowline system for carrying out the method according to the invention;
Fig. 2 shows schematically a control system for use in the flowline system of Fig. 1; and
Fig. 3 shows a diagram indicating the variation of liquid flow in a flowline system as a function of time, whereby the method of the invention has been applied. In Fig. 3 the horizontal axis represents time in seconds and the vertical axis represents the volume of liquid (in litres) in the large separator.

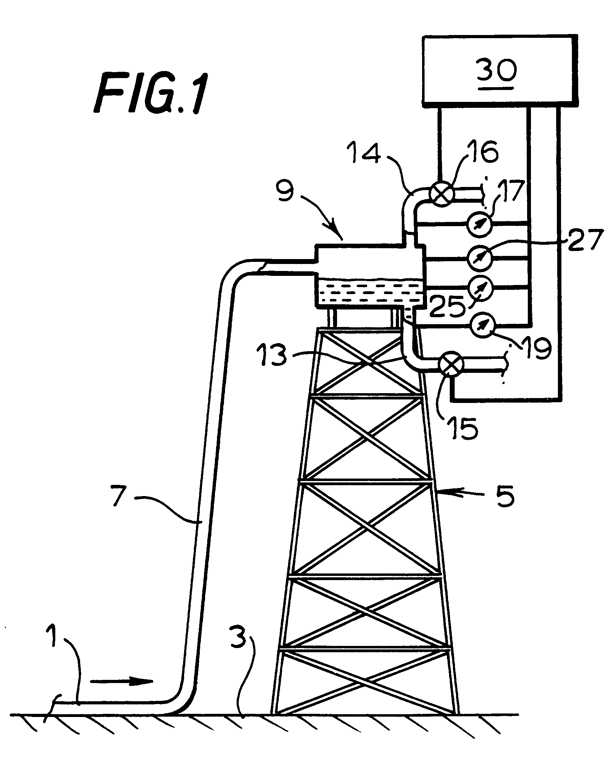

The flowline system of Fig. 1 comprises a pipeline 1 extending on the seafloor 3 from a wellhead (not shown) to an offshore platform 5, an upwardly inclined pipeline section in the form of a riser 7 connected to the platform 5 and a gas/liquid separator 9 having a liquid outlet conduit 13 and a gas outlet conduit 14. The liquid outlet conduit 13 is provided with a liquid flow control valve 15, and the gas outlet conduit is provided with a gas flow control valve 16. The valves 15, 16 can be of any suitable type such as a vortex amplifier disclosed in The Oilman, August 1987, pp. 82-85. A gas flow meter 17 is provided in the gas outlet conduit 14 and a liquid flow meter 19 is provided in the liquid outlet conduit 13. The separator 9 is further provided with a liquid level gauge 25 and a pressure gauge 27. A control system 30 is provided which receives signals from the gas flow meter 17, the liquid flow meter 19, the liquid level gauge 25, and the pressure gauge 27, which control system 30 controls the valves 15, 16 in a manner depending on the signals received by the control system 30. The liquid outlet conduit 13 and the gas outlet conduit 14 are in fluid communication with the interior of a slug-catching separator (not shown) located downstream the separator 9. The slug-catching separator is of a size considerably larger than the separator 9.

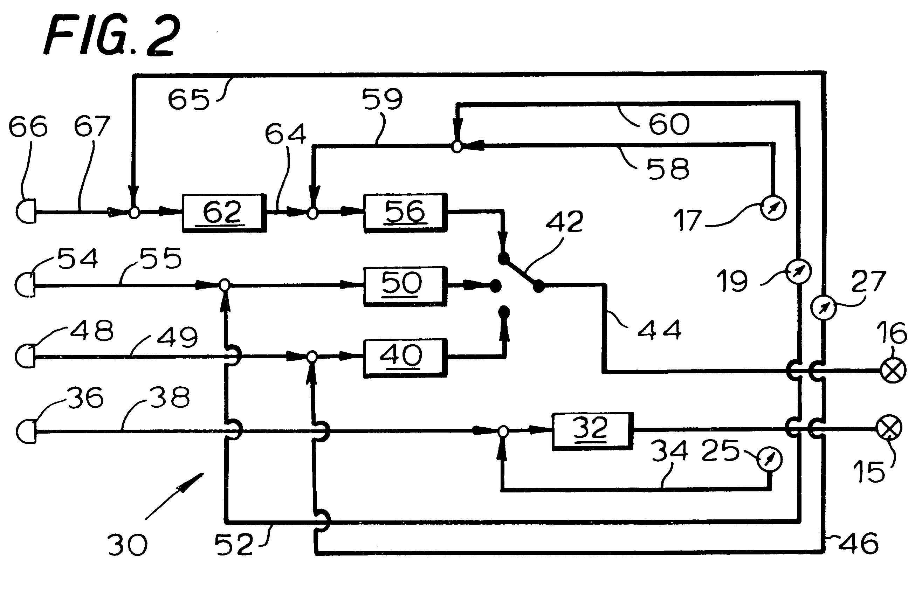

Fig. 2 shows schematically the control system 30 of Fig. 1 in more detail, whereby corresponding reference numerals refer to corresponding components. The arrows shown in Fig. 2 indicate the direction of transfer of electric control signals from one component to another. The control system 30 includes a liquid level controller 32 which manipulates valve 15 in response to input signals received from liquid level gauge 25 via control line 34 and from a liquid level set-point 36 via control line 38. A pressure controller 40 is connectable to valve 16 via switch 42 and control line 44 so as to manipulate valve 16 in response to input signals received from pressure gauge 27 via control line 46 and from a pressure set-point 48 via control line 49. A liquid flow rate controller 50 is connectable to valve 16 via switch 42 and control line 44 so as to manipulate valve 16 in response to input signals received from liquid flow meter 19 via control line 52 and a liquid flow rate set-point 54 via control line 55. A mixture controller 56 is connectable to valve 16 via switch 42 and control line 44 so as to manipulate valve 16 in response to input signals received from gas flow meter 17 via control line 58, from liquid flow meter 19 via control line 60, and from a pressure controller 62 via control line 64. The signals in control lines 58, 60 are summed so as to provide a fluid flux signal which is transferred to mixture controller via control line 59. The pressure controller 62 receives input signals from pressure gauge 27 via control line 65 and from pressure set-point 66 via control line 67.

During normal operation of the flowline system shown in Figure 1, a mixture of gas and liquid flows from the wellhead through the underwater pipeline 1 and riser 7 into the gas/liquid separator 9. Gas is discharged from the separator 9 through the gas outlet conduit 14 and liquid through the liquid outlet conduit 13. The volumetric gas flux in the gas outlet conduit 14 is continuously measured using the gas volumetric flow meter 17 and the volumetric liquid flux in the liquid outlet conduit 13 is continuously measured using the liquid volumetric flow meter 19. The liquid level in the separator 9 is continuously measured using the liquid level gauge 25 and the pressure in the separator 9 is continuously measured using the pressure gauge 27.

When control of fluid-flow using controller 30 is started, for example when control is switched from manual to automatic just after blockage of the riser 7 due to the occurrence of a slug has occurred, the switch 42 is switched to the position in which pressure controller 40 is connected to valve 16. The pressure controller 40 manipulates valve 16 in a manner so as to decrease a difference between a pressure signal from pressure gauge 27 and a signal from set-point 48. Control valve 15 is manipulated by level controller 32 so as to decrease a difference between a signal from liquid level gauge 25 and a signal from set-point 36. When the liquid slug starts to flow into the separator, the switch 42 is switched to the position in which liquid flow rate controller 50 is connected to valve 16. The liquid flow rate controller 50 manipulates valve 16 in a manner so as to decrease a difference between a liquid flow rate signal from flow meter 19 and a signal from set-point 54. Thereafter switch 42 is switched to the position in which mixture controller 56 is connected to valve 16, which mixture controller 56 manipulates valve 16 in a manner so as to decrease a difference between a fluid flow rate signal, defined as the sum of a liquid flow rate signal from liquid flow meter 19 and a gas flow rate signal from gas flow meter 17, and a signal received from pressure controller 62. Pressure controller 62 provides an input signal to mixture controller 56 via control line 64, which input signal is aimed at reducing a difference between a pressure signal from pressure gauge 27 and a signal from set-point 66.

Experiments have been carried out in a pipeline system comprising a horizontal section of 50 m length, a declining section of 50 m length (angle of declination 2° to the horizontal plane), and a vertical riser section of 16.2 m length. The length of the flowline system was such that severe slugging occurred. The internal diameter of the sections was 0.05 m. At the top of the riser, the downstream end of the pipeline system, there is provided a separator. An air/water fluid mixture wherein the water contained 20 %w mono-ethylene glycol was pumped through the pipeline system, whereby the superficial gas velocity and the superficial liquid velocity at the upstream end of the pipeline were 0.215 m/s and 0.184 m/s respectively. The set-point pressure of pressure controllers 40 and 62 was 3 bar, the set-point of level controller 32 was 50% of the internal volume of gas/liquid separator 9.

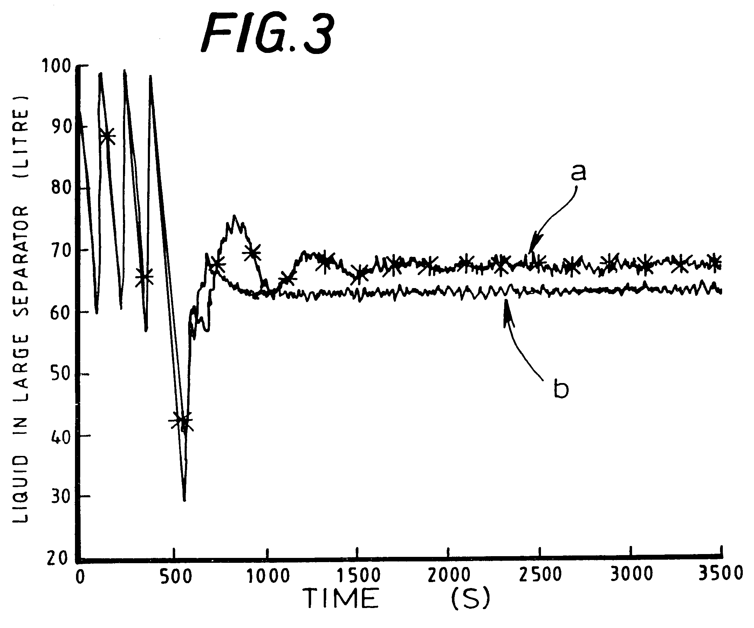

The results of these experiments are shown in Fig. 3 indicating the liquid contents of the slug catching separator as a function of time, using a constant drawn down rate of the slug catching separator. The control variable was selected to be the liquid flow rate (line a) and the fluid flow rate (line b), the latter being the sum of the liquid flow rate and the gas flow rate. For the case in which the control variable was the liquid flow rate (line a), mixture controller 56 was used whereby the control line 58 was disconnected so that the fluid flow rate signal in control line 59 was identical to the liquid flow rate signal in control line 60. The fluid stream was in the severe slugging mode up to time t = 450 s, at which time the control system 30 was switched on. As a result of the slug flow mode, the liquid contents in the slug catching separator showed strong oscillations prior to t = 450 s, which oscillations soon damped out after the control system 30 was switched on. As is clear from Fig. 3 it was found that for the control variable being the liquid flow rate (line a), a slight oscillation of the liquid content of the separator remained compared to the situation in which the fluid flow rate was the control variable (line b). However, such remaining oscillation was negligible in comparison to the strong oscillation during slug flow.

## Claims

1. A method of preventing growth of liquid slugs in a stream of multiphase fluid flowing from a flowline (1) into a gas/liquid separator (9), said gas/liquid separator (9) having a liquid outlet (13) provided with liquid flow rate control means (15) and a gas outlet (14) provided with gas flow rate control means (16), the method comprising:
- measuring a liquid level in the separator;
- measuring at least one control variable selected from the group of the liquid flow rate in the liquid outlet (13), the gas flow rate in the gas outlet (14), the sum of the liquid flow rate in the liquid outlet (13) and the gas flow rate in the gas outlet (14), and the fluid pressure at or near the separator (9); characterized in that the method further comprises
- operating said liquid flow rate control means (15) and said gas flow rate control means (16) essentially on the basis of said measurements so as to reduce a difference between said liquid level and a selected reference value of the liquid level, and so as to reduce a difference between said control variable and a selected reference value of the control variable.

2. The method of claim 1, wherein said liquid flow rate control means (15) is operated so as to reduce the difference between said liquid level and the selected reference value of the liquid level, and said gas flow rate control means (16) is operated so as to reduce the difference between said control variable and the reference value of the control variable.

3. The method of claim 1 or 2, wherein during a start-up period of the method, when a liquid slug has entered a riser section (7) of the flowline (1) and before said liquid slug enters the separator (9), said control variable is selected to be the fluid pressure at or near the separator (9).

4. The method of claim 3, wherein during said start-up period, after the liquid slug has started to flow into the separator (9), said control variable is selected to be the liquid flow rate in the liquid outlet of the separator.

5. The method of claim 1 or 2, wherein said control variable is selected to be the liquid flow rate in the liquid outlet (13) of the separator (9).

6. The method of claim 1 or 2, wherein said control variable is selected to be the sum of the liquid flow rate in the liquid outlet (13) and the gas flow rate in the gas outlet (14).

7. The method of claim 5 or 6, wherein the reference value of said control variable is generated by reducing a difference between the fluid pressure at or near the separator (9) and a selected reference value of the fluid pressure.

8. A system for preventing growth of liquid slugs in a stream of multiphase fluid flowing from a flowline (1) into a gas/liquid separator (9), said gas/liquid separator (9) having a liquid outlet (13) provided with liquid flow rate control means (15) and a gas outlet (14) provided with gas flow rate control means (16), the system comprising:
- means (25) for measuring a liquid level in the separator;
- means (19, 17, 27) for measuring at least one control variable selected from the group of the liquid flow rate in the liquid outlet, the gas flow rate in the gas outlet, the sum of the liquid flow rate in the liquid outlet and the gas flow rate in the gas outlet, and the fluid pressure at or near the separator; characterized in that the system further comprises
- means (30) for operating said liquid flow rate control means and said gas flow rate control means (16) essentially on the basis of the outputs of said measurement means (19, 17, 25, 27) so as to reduce a difference between said liquid level and a selected reference value of the liquid level, and so as to reduce a difference between said control variable and a selected reference value of the control variable.

9. The system of claim 8, wherein said separator (9) forms a primary separator, the gas outlet and the liquid outlet of the primary separator debouching into a secondary separator forming a slug catching separator.

10. The system of claim 8 or 9, wherein said flowline (1) includes an upwardly inclined section (7) debouching into the gas/liquid separator.

## Patentansprüche

1. Verfahren zum Verhindern des Anwachsens von Flüssigkeitsschwallen in einer mehrphasigen Fluidströmung, die aus einer Strömungsleitung (1) in einen Gas/Flüssigkeits-Separator (9) strömt, welcher Gas/Flüssigkeits-Separator (9) einen mit Flüssigkeitsströmungsratensteuerungsmitteln (15) ausgestatteten Flüssigkeitsauslaß (13) und einen mit Gasströmungsratensteuerungsmitteln (16) ausgestatteten Gasauslaß (14) aufweist, welches Verfahren umfaßt:
- Messen eines Flüssigkeitspegels im Separator;
- Messen zumindest einer Steuervariablen, die aus der Gruppe: Flüssigkeitsströmungsrate im Flüssigkeitsauslaß (13), Gasströmungsrate im Gasauslaß (14), Summe aus Flüssigkeitsströmungsrate im Flüssigkeitsauslaß (13) und Gasströmungsrate im Gasauslaß (14), und Fluiddruck an oder nahe dem Separator (9) gewählt wird; dadurch gekennzeichnet, daß das Verfahren ferner umfaßt:
- Betreiben der Flüssigkeitsströmungsratensteuerungsmittel (15) und der Gasströmungsratensteuerungsmittel (16) im wesentlichen auf Basis der genannten Messungen, um eine Differenz zwischen dem Flüssigkeitspegel und einem ausgewählten Referenzwert des Flüssigkeitspegels zu reduzieren, und um eine Differenz zwischen der Steuervariablen und einem ausgewählten Referenzwert der Steuervariablen zu reduzieren.

2. Verfahren nach Anspruch 1, bei welchem die Flüssigkeitsströmungsratensteuerungsmittel (15) so betrieben werden, daß die Differenz zwischen dem Flüssigkeitspegel und dem ausgewählten Referenzwert des Flüssigkeitspegels reduziert wird, und die Gasströmungsratensteuerungsmittel (16) so betrieben werden, daß die Differenz zwischen der Steuervariablen und dem Referenzwert der Steuervariablen reduziert wird.

3. Verfahren nach Anspruch 1 oder 2, bei welchem während einer Anfahrphase des Verfahrens, wenn ein Flüssigkeitsschwall in einen Steigrohrabschnitt (7) der Strömungsleitung (1) eingetreten ist und bevor der Flüssigkeitsschwall in den Separator (9) eintritt, als Steuervariable der Fluiddruck an oder nahe dem Separator (9) gewählt wird.

4. Verfahren nach Anspruch 3, bei welchem während der Anfahrphase, nachdem der Flüssigkeitsschwall begonnen hat, in den Separator (9) zu strömen, als Steuervariable die Flüssigkeitsströmungsrate im Flüssigkeitsauslaß des Separators gewählt wird.

5. Verfahren nach Anspruch 1 oder 2, bei welchem als Steuervariable die Flüssigkeitsströmungsrate im Flüssigkeitsauslaß (13) des Separators (9) gewählt wird.

6. Verfahren nach Anspruch 1 oder 2, bei welchem als Steuervariable die Summe aus Flüssigkeitsströmungsrate im Flüssigkeitsauslaß (13) und Gasströmungsrate im Gasauslaß (14) gewählt wird.

7. Verfahren nach Anspruch 5 oder 6, bei welchem der Referenzwert der Steuervariablen durch Reduzieren einer Differenz zwischen dem Fluiddruck an oder nahe dem Separator (9) und einem ausgewählten Referenzwert des Fluiddruckes erzeugt wird.

8. System zum Verhindern des Anwachsens von Flüssigkeitsschwallen in einem mehrphasigen Fluidstrom, der von einer Strömungsleitung (1) in einen Gas/Flüssigkeits-Separator (9) strömt, welcher Gas/Flüssigkeits-Separator (9) einen mit Flüssigkeitsströmungsratensteuerungsmitteln (15) versehenen Flüssigkeitsauslaß (13) und einen mit Gasströmungsratensteuerungsmitteln (16) versehenen Gasauslaß (14) aufweist, wobei das System aufweist:
- Mittel (25) zum Messen eines Flüssigkeitspegels im Separator;
- Mittel (19, 17, 27) zum Messen zumindest einer Steuervariablen, die aus der Gruppe: Flüssigkeitsströmungsrate im Flüssigkeitsauslaß, Gasströmungsrate im Gasauslaß, Summe aus Flüssigkeitsströmungsrate im Flüssigkeitsauslaß und Gasströmungsrate im Gasauslaß, und Fluiddruck an oder nahe dem Separator gewählt ist; dadurch gekennzeichnet, daß das System weiters aufweist:
- Mittel (30) zum Betreiben der Flüssigkeitsströmungsratensteuerungsmittel und der Gasströmungsratensteuerungsmittel (16) im wesentlichen auf Basis der Ausgänge der genannten Meßmittel (19, 17, 25, 27), um eine Differenz zwischen dem Flüssigkeitspegel und einem ausgewählten Referenzwert des Flüssigkeitspegels zu reduzieren, und um eine Differenz zwischen der Steuervariablen und einem ausgewählten Referenzwert der Steuervariablen zu reduzieren.

9. System nach Anspruch 8, bei welchem der Separator (9) einen Hauptseparator bildet, wobei der Gasauslaß und der Flüssigkeitsauslaß des Hauptseparators in einen Hilfsseparator münden, der einen schwallfangenden Separator bildet.

10. System nach Anspruch 8 oder 9, bei welchem die Strömungsleitung (1) einen nach oben geneigten Abschnitt (7) aufweist, der in den Gas/Flüssigkeits-Separator mündet.

## Revendications

1. Procédé pour empêcher la croissance de bouchons liquides dans un écoulement de fluide multiphasé provenant d'un conduit d'écoulement (1) pour pénétrer dans un séparateur gaz/liquide (9), ledit séparateur gaz/liquide (9) étant doté d'une sortie de liquide (13) équipée d'un moyen (15) de réglage du débit du liquide et d'une sortie de gaz (14) équipée d'un moyen (16) de réglage du débit de gaz, le procédé comportant des étapes consistant à:
- mesurer un niveau liquide dans le séparateur;
- mesurer au moins une variable de réglage choisie dans le groupe du débit de liquide dans la sortie de liquide (13), du débit de gaz dans la sortie de gaz (14), de la somme du débit de liquide dans la sortie de liquide (13) et du débit de gaz dans la sortie de gaz (14) et de la pression du fluide au droit du séparateur (9) ou à proximité de ce dernier; caractérisé en ce que le procédé comporte en outre les étapes consistant à:
- faire travailler ledit moyen (15) de réglage du débit de liquide et ledit moyen (16) de réglage du débit de gaz essentiellement sur base desdites mesures, de manière à diminuer une différence entre ledit niveau de liquide et une valeur de référence sélectionnée du niveau de liquide, et pour ainsi diminuer une différence entre ladite variable de réglage et une valeur de référence sélectionnée de la variable de réglage.

2. Procédé selon la revendication 1, dans lequel ledit moyen (15) de réglage du débit de liquide est utilisé de manière à diminuer la différence entre ledit niveau de liquide et la valeur de référence sélectionnée du niveau de liquide, et ledit moyen (16) de réglage du débit de gaz est utilisé de manière à diminuer la différence entre ladite variable de réglage et la valeur de référence de la variable de réglage.

3. Procédé selon les revendications 1 ou 2, dans lequel, pendant une période de mise en route du procédé, lorsqu'un bouchon liquide a pénétré dans une partie montante (7) du conduit d'écoulement (1) et avant que le bouchon liquide a pénétré dans le séparateur (9), ladite variable de réglage est choisie comme étant la pression du fluide au droit du séparateur (9) ou à proximité de ce dernier.

4. Procédé selon la revendication 3, dans lequel, pendant ladite période de mise en route, lorsque le bouchon liquide a commencé à s'écouler dans le séparateur (9), ladite variable de réglage est choisie comme étant le débit de liquide dans la sortie de liquide du séparateur.

5. Procédé selon les revendications 1 ou 2, dans lequel ladite variable de réglage est choisie comme étant le débit du liquide dans la sortie de liquide (13) du séparateur (9).

6. Procédé selon les revendications 1 ou 2, dans lequel ladite variable de réglage est choisie comme étant la somme du débit de liquide dans la sortie de liquide (13) et du débit de gaz dans la sortie de gaz (14).

7. Procédé selon les revendications 5 ou 6, dans lequel la valeur de référence de ladite variable de réglage est produite en réduisant une différence entre la pression du fluide au droit du séparateur (9) ou à proximité de ce dernier et une valeur de référence sélectionnée de la pression du fluide.

8. Système en vue d'empêcher la croissance de bouchons liquides dans un écoulement de fluide multiphasé s'écoulant en provenance d'un conduit d'écoulement (1) dans un séparateur gaz/liquide (9), ledit séparateur gaz/liquide (9) étant doté d'une sortie de liquide (13) munie d'un moyen (15) de réglage du débit de liquide et d'une sortie de gaz (14) munie d'un moyen (16) de réglage du débit de gaz, le système comprenant:
- un moyen (25) pour mesurer un niveau de liquide dans le séparateur;
- des moyens (19, 17, 27) pour mesurer au moins une variable de réglage choisie dans le groupe constitué du débit de liquide dans la sortie de liquide, du débit de gaz dans la sortie de gaz, de la somme du débit de liquide dans la sortie de liquide et du débit de gaz dans la sortie de gaz, et de la pression du fluide au droit du séparateur ou à proximité de ce dernier; caractérisé en ce que le système comporte en outre:
- un moyen (30) pour faire travailler ledit moyen de réglage du débit de liquide et ledit moyen (16) de réglage du débit de gaz essentiellement sur base des sorties desdits moyens de mesure (19, 17, 25, 27), de manière à diminuer une différence entre ledit niveau de liquide et une valeur de référence sélectionnée du niveau de liquide, et à diminuer une différence entre ladite variable de réglage et une valeur de référence sélectionnée de la variable de réglage.

9. Système selon la revendication 8, dans lequel ledit séparateur (9) forme un séparateur primaire, la sortie de gaz et la sortie de liquide du séparateur primaire débouchant dans un séparateur secondaire formant un séparateur piégeant les bouchons.

10. Système selon les revendications 8 ou 9, dans lequel ledit conduit d'écoulement (1) comporte une partie (7) inclinée vers le haut et débouchant dans le séparateur gaz/liquide.
